# EUROPÄISCHE PATENTSCHRIFT

(11) **EP 1 540 192 B1**
(45) Veröffentlichungstag und Bekanntmachung des Hinweises auf die Patenterteilung: **28.06.2006**
(21) Anmeldenummer: 03750343.0
(22) Anmeldetag: 11.09.2003
(51) Int. Cl.: F16B 5/07, F16B 45/00, B62J 7/00

(54) **FLACHER VERBINDUNGSHAKEN**
FLAT CONNECTING HOOK
CROCHETS D'ASSEMBLAGE PLATS

(30) Priorität: 15.09.2002 DE 20214286 U
(43) Veröffentlichungstag der Anmeldung: 15.06.2005
(73) Patentinhaber: John, Melanie, 79106 Freiburg (DE)
(72) Erfinder: JOHN, Melanie, 79106 Freiburg (DE); NUTTO, Uwe, 79106 Freiburg (DE)
(74) Vertreter: Zimmermann, Günter
(86) Internationale Anmeldenummer: PCT/DE2003/003025
(87) Internationale Veröffentlichungsnummer: WO 2004/027273

(56) Entgegenhaltungen:
- DE-A- 3 529 055
- DE-A- 4 116 028
- DE-C2- 19 640 621
- FR-A- 2 646 406
- US-A- 3 283 382

## Beschreibung

Die Erfindung bezieht sich auf ein Verbindungselement mit den Merkmalen des Oberbegriffs des Anspruchs 1.

Ein derartiges Verbindungselement ist durch die DE 35 29 055 A1 bekannt. Bei diesem Verbindungselement sind die beiden seitlichen Endbereiche gegenüber dem Mittelteil derart abgewinkelt, daß sich die Ebene, welche durch die beiden seitlichen Endbereiche verläuft, mit der Ebene, welche durch das Mittelteil verläuft, im Biegebereich schneidet. Das Verbindungselement ist nachteiligerweise wenig formstabil.

Ein weiteres Verbindungselement ist durch die DE 196 40 621 C2 bekannt. Dieses Verbindungselement ist ein Hakenelement und kann sowohl über eine Stange oder dergleichen eingehängt als auch mit einem zweiten Hakenelement verbunden werden. Das Hakenelement weist im Bereich des Mittelteils eine seitliche Öffnung auf. Nachteiligerweise läßt sich dieses bekannte L-förmige Hakenelement nur im Druck- oder Spritzgußverfahren herstellen. Beim Verbinden zweier Hakenelemente benötigt man ein Hakenelement mit einer rechten seitlichen Öffnung und ein Hakenelement mit einer linken seitlichen Öffnung, Folglich benötigt man für die industrielle Fertigung dieser bekannten Hakenelemente nachteiligerweise mindestens zwei unterschiedliche Druck- oder Spritzgußwerkzeuge, eines, welches den Haken mit einer rechten seitlichen Öffnung versieht und eines, welches den Haken mit einer linken seitlichen Öffnung versieht.

Die Aufgabe der Erfindung wird somit darin gesehen, das eingangs genannte Verbindungselement derart weiterzuentwickeln, daß es einfach und kostengünstig hergestellt werden kann und weiterhin formstabil und belastbar ist.

Zur Lösung dieser Aufgabe wird erfindungsgemäß vorgeschlagen, daß das Verbindungselement gemäß dem Oberbegriff des Anspruchs 1 entsprechend dem kennzeichnenden Teil dieses Anspruches ausgebildet ist.

Bei dem erfindungsgemäßen Verbindungselement sind die Ebene, in welcher das Mittelteil liegt, und die Ebene, in welcher die beiden seitlichen Endbereiche liegen, zueinander parallel und weisen einen Abstand auf, welcher sich durch die Höhe der Biegung ergibt. Das erfindungsgemäße Verbindungselement ist nicht mehr L-förmig, sondern vielmehr gespiegelt doppelt L-förmig, also etwa E-förmig ausgebildet. Durch diese E-Form wird das Verbindungselement formstabiler als der L-förmige Haken. Bei der industriellen Fertigung kann auf Druck- oder Spritzgußwerkzeuge verzichtet werden. Das erfindungsgemäße Verbindungselement läßt sich beispielsweise aus Stahlblech ausschneiden und auch stanzen. Um mit dem Verbindungselement zwei Gegenstände miteinander zu verbinden, wird an beiden Gegenständen jeweils mindestens ein identisches Verbindungselement befestigt. Stellt man nun die Gegenstände mit ihrer jeweiligen Rückseite einander gegenüber, so läßt sich das erste Verbindungselement mit seinen zwei seitlichen Öffnungen in die zwei seitlichen Öffnungen des gegenüberliegenden zweiten Verbindungselementes schieben. Da zwei Gegenstände nun mit identisch ausgebildeten Verbindungselementen verbindbar sind, entfällt die Notwendigkeit der Herstellung von zwei unterschiedlichen Druck- oder Spritzgußwerkzeugen. Das erfindungsgemäße Verbindungselement ist flächig ausgebildet, wobei der erste seitliche Endbereich und der zweite seitliche Endbereich in derselben Ebene liegen und das Mittelteil aufgrund des Biegebereiches versetzt entweder oberhalb oder unterhalb dieser Ebene angeordnet ist.

Die seitlichen Öffnungen sind vorteilhafterweise in den Biegebereichen angeordnet, wobei jeweils eine seitliche Öffnung in einem Biegebereich vorgesehen ist. Die Biegebereiche können unterschiedlich stark abgewinkelt sein. Zweckmäßigerweise sind jedoch die beiden Biegebereiche identisch ausgebildet, so daß das Mittelteil gegenüber dem ersten seitlichen Endbereich und auch gegenüber dem zweiten seitlichen Endbereich denselben Höhenabstand hat. Bezüglich einer Mittelebene, welche quer durch das Verbindungselement läuft, ist damit vorteilhafterweise eine spiegelsymmetrische Ausbildung des Verbindungselementes gegeben.

Das erfindungsgemäße Verbindungselement hat den weiteren Vorteil, daß durch die insgesamt flache Ausbildung des Verbindungselementes zwei Gegenstände mit einem geringen Abstand verbunden werden können.

Das Verbindungselement kann darüber hinaus einen mittigen, sich verjüngenden Einschnitt aufweisen, wodurch es sich nicht nur über eine Stange oder dergleichen einhängen läßt, sondern auch über einen pilzförmigen Zapfen. Dadurch wird erreicht, daß auch beim Befestigen an einem pilzförmigen Zapfen eine sehr enge Verbindung zustande kommt.

Je nach Anwendung kann der mittige Einschnitt unterschiedlich angeordnet sein. Eine Ausführungsform der Erfindung sieht deshalb vor, daß der mittige Einschnitt mit seiner Öffnungsrichtung entgegengesetzt der Öffnungsrichtung der beiden seitlichen Öffnungen ausgebildet ist. Eine weitere Ausführungsform der Erfindung sieht vor, daß der mittige Einschnitt die gleiche Öffnungsrichtung aufweist wie die Öffnungsrichtung der beiden seitlichen Öffnungen.

Das Zusammenfügen zweier Verbindungselemente wird erleichtert, wenn die seitlichen Öffnungen vorteilhafterweise Anlaufschrägen aufweisen. Ebenso können die mittigen, verjüngt zulaufenden Einschnitte vorteilhafterweise Anlaufschrägen aufweisen.

Bei der Verwendung mehrerer E-förmiger Verbindungselemente können zwei Gegenstände in kreisförmiger Bewegung zusammengeführt werden, indem die Verbindungselemente im Bereich ihrer seitlichen Öffnungen Anlaufschrägen aufweisen und um 90° gedreht an den Gegenständen angebracht sind.

Die Erfindung wird nachstehend anhand der Zeichnung näher erläutert. Die Zeichnung zeigt Ausführungsbeispiele der Erfindung. Hierbei stellen dar:
Fig.1 eine schematische Draufsicht eines ersten Ausführungsbeispieles des erfindungsgemäßen Verbindungselementes,
Fig.2 eine schematische Draufsicht eines weiteren Ausführungsbeispieles des Verbindungselementes,
Fig.3 eine Vorderansicht nach Fig.2,

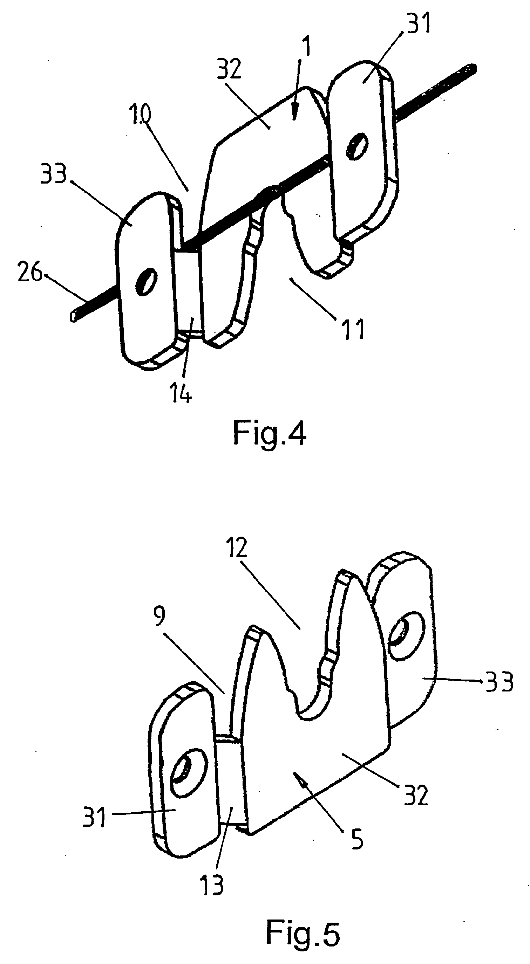

Fig.4 eine perspektivische Ansicht des Verbindungselementes nach Fig.1 von der Rückseite,
Fig.5 eine perspektivische Ansicht des Verbindungselementes nach Fig.2,
Fig.6 den Vorgang des Verbindens mittels Drehbewegung von vier Verbindungselementen nach Fig.1 mit vier Zapfen, die auf einem Rahmen montiert sind,
Fig. 7 die Verbindung von vier Verbindungselementen nach Fig.1 mit vier Zapfen, die auf einem Rahmen montiert sind,
Fig.8 den Vorgang des Verbindens mittels Drehbewegung von vier Verbindungselementen nach Fig.1 mit vier Verbindungselementen nach Fig.2, die auf einer Platte montiert sind und
Fig.9 die Verbindung von vier Verbindungselementen nach Fig.1 mit vier Verbindungselementen nach Fig.2, die auf einer Platte montiert sind.

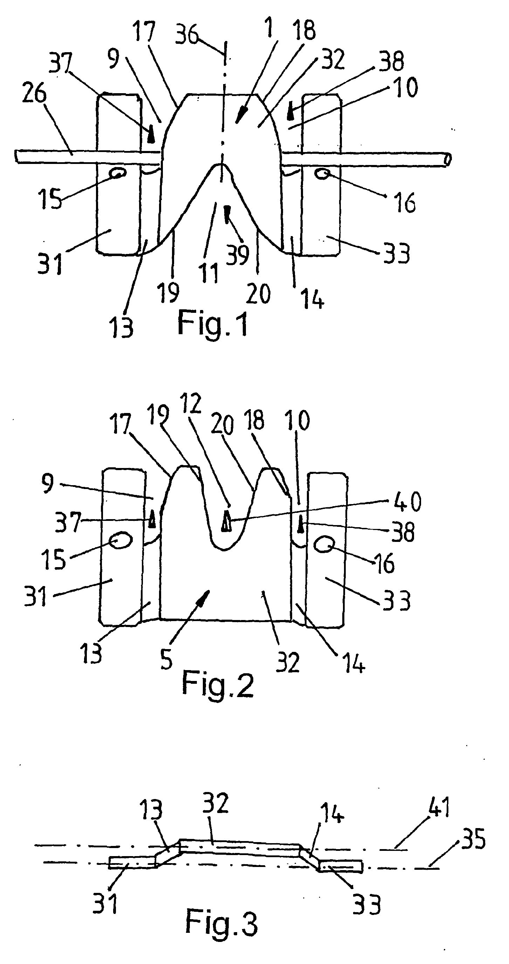

Das in Fig. 1 dargestellte Verbindungselement 1 weist einen ersten seitlichen Seitenbereich 31, einen Mittelteil 32 und einen zweiten seitlichen Endbereich 33 auf, welche alle flach ausgebildet und von links nach rechts gesehen nachfolgend angeordnet sind. Der erste Endbereich 31 ist mit den Mittelteil 32 über einen Biegebereich oder abgewinkelten Bereich 13 verbunden. Ebenso ist das Mittelteil 32 mit dem Endbereich 33 über einen Biegebereich oder abgewinkelten Bereich 14 verbunden. Wie aus Fig. 3 ersichtlich, sind diese beiden Biegebereiche 13, 14 derart abgewinkelt, daß sich das Mittelteil 32 bezüglich einer durch die beiden Endbereiche 31 und 33 verlaufenden Ebene 35 oberhalb dieser Ebene 35 in einer Ebene 41 befindet. Der Biegebereich 13 weist eine seitliche Öffnung 9 auf und der Biegebereich 14 weist eine seitliche Öffnung 10 auf. Das Mittelteil 32 weist einen mittigen Einschnitt 11 auf, welcher symmetrisch zur einer Mittelachse 36 ausgebildet ist. Bei dem Verbindungselement gemäß Fig. 1 sind die seitlichen Öffnungen 9, 10 so ausgerichtet, daß eine Öffnungsrichtung 37 der seitlichen Öffnung 9 und eine Öffnungsrichtung 38 der seitlichen Öffnung 10 entgegengesetzt einer Öffnungsrichtung 39 des Einschnitts 11 ausgebildet ist. Zum Befestigen des Verbindungselementes an einem Rucksack oder an einer Tasche sind an den seitlichen Endbereichen 31, 33 etwa mittig jeweils ein Befestigungspunkt oder Anbringungspunkt 15, 16 angebracht.

Bei dem Verbindungselement 5 gemäß Fig. 2 ist an dem Mittelteil 32 ebenfalls ein mittiger Einschnitt 12 angebracht. Die Öffnungsrichtung 40 dieses mittigen Einschnittes 12 verläuft allerdings in gleicher Richtung wie die Öffnungsrichtungen 37 und 38 der seitlichen Öffnungen 9, 10. Ansonsten ist dieses Verbindungselement 5 gemäß Fig. 2 identisch ausgebildet wie das Verbindungselement 1 gemäß Fig. 1.

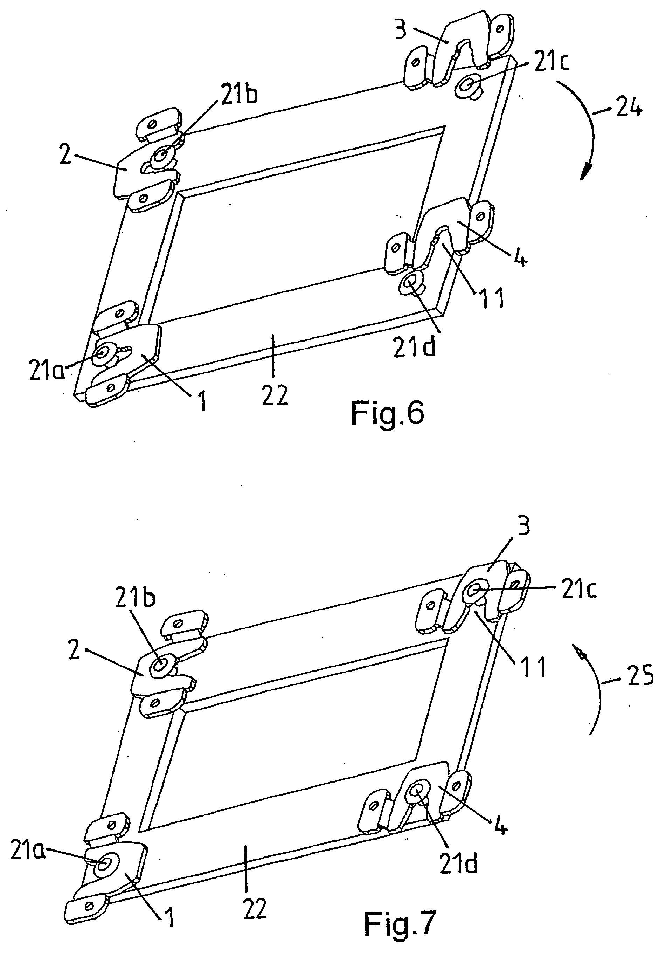

Die Verbindungselemente 1 und 5 lassen sich mit ihren seitlichen Öffnungen 9, 10 über eine Stange 26 einhängen. Darüber hinaus gewährleisten die mittigen Einschnitte 11, 12 das Verbinden der Verbindungselemente 1, 5 mit einem Zapfen 21, wie in den Fig. 6 und 7 dargestellt.

Die Verbindungselement 1 und 5 werden untereinander verbunden, indem das Verbindungselement 1 mit seinen beiden seitlichen Öffnungen 9 und 10, die sich in den abgewinkelten Bereichen 13 und 14 befinden, in die beiden seitlichen Öffnungen 9 und 10 des Verbindungselementes 5 eingeschoben werden. Ebenso ist es möglich, zwei Verbindungselemente 1 untereinander zu verbinden, wobei die seitliche Öffnung 9 des einen Verbindungselementes 1 in die seitliche Öffnung 9 des anderen Verbindungselementes 1 eingeschoben wird und die seitliche Öffnung 10 des einen Verbindungselementes 1 in die seitliche Öffnung 10 des anderen Verbindungselementes 1 eingeschoben wird. Das Verbinden von zwei Verbindungselementen 5 erfolgt in gleicher Weise.

Mittels der Befestigungspunkte oder Anbringungspunkte 15 und 16 kann ein bündiges Fixieren an einem Gegenstand mittels Nieten, Schrauben oder dergleichen erfolgen.

An dem Mittelteil 32 sind im Bereich der seitlichen Öffnung 9 eine Anlaufschräge oder Rundung 17 und im Bereich der Öffnung 10 eine Anlaufschräge oder Rundung 18 vorgesehen. Diese Anlaufschrägen 17 oder 18 werden benötigt, um zwei Verbindungselemente in einer Drehbewegung untereinander zu verbinden. Weiterhin sind an dem Einschnitt 11 in seinen Außenbereichen Anlaufschrägen 19 und 20 vorgesehen und an dem Einschnitt 12 sind ebenfalls in seinem Außenbereich Anlaufschrägen 19, 20 vorgesehen. Diese Anlaufschräge 19, 20 werden benötigt, um die Verbindungselemente 1 und 5 in einer Drehbewegung mit einem Zapfen zu verbinden.

In Fig. 6 wird der Vorgang des Verbindens mittels einer Drehbewegung von vier Verbindungselementen 1 gemäß Fig. 1 mit vier Zapfen 21, die auf einem Rahmen 22 montiert sind, dargestellt. Um einen Gegenstand 23, an dessen Rückwand vier identische Verbindungselemente 1 bis 4 bündig befestigt sind, mittels Drehbewegung mit vier Zapfen 21 zu verbinden, ist es erforderlich, daß die Verbindungselemente 1 bis 4 in 90° bzw. 180° Winkeln zueinander stehen. Das Verbinden erfolgt, in dem zuerst das Verbindungselement 1 auf den Zapfen 21 a geschoben wird. Mittels der anschließend auszuführenden Drehbewegung 24 verbindet sich das im Vergleich zum Verbindungselement 1 um 180° gedrehte Verbindungselement 2 mit dem Zapfen 21 b, das im Vergleich zum Verbindungselement 1 um 90° gedrehte Verbindungselement 3 mit dem Zapfen 21 c und das im Vergleich zum Verbindungselement 1 ebenfalls um 90° gedrehte Verbindungselement 4 mit dem Zapfen 21d. Bei dem in Fig. 6 dargestellten Ausführungsbeispiel stellt der Zapfen 21a den Drehmittelpunkt für die Drehbewegung 24 dar.

Bei Verwendung von vier Verbindungselementen 5 vollzieht sich der Verbindungsvorgang in gleicher Weise, vorausgesetzt, die jeweiligen mittigen Einschnitte 12 weisen in die gleiche Richtung wie die in Fig. 6 dargestellten mittigen Einschnitte 11.

Fig. 7 zeigt die vollzogene Verbindung von den Verbindungselementen 1 bis 4 mit den Zapfen 21a bis 21 d, die durch die beschriebene um 90° bzw 180° gedrehte Anordnung der Verbindungselemente in drei Richtungen gesichert ist. Zum Lösen der Verbindung muß die zuvor beschriebene Drehbewegung 24 in entgegengesetzte Richtung 25 ausgeführt werden, wobei der Zapfen 21 a wie zuvor den Drehmittelpunkt darstellt. Bei Verwendung von vier Verbindungselementen 5 (nicht dargestellt) vollzieht sich der Lösevorgang in gleicher Weise, wiederum vorausgesetzt, die jeweiligen mittigen Einschnitte 12 weisen in die gleiche Richtung wie die in Fig. 6 dargestellten mittigen Einschnitte 11.

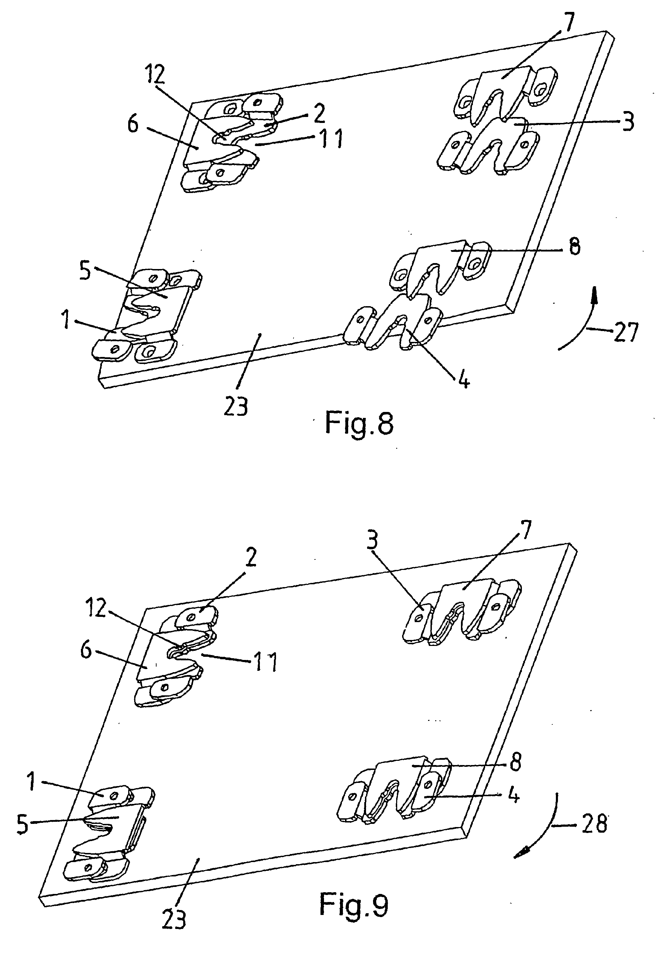

In Fig. 8 ist der Vorgang es Verbindens mittels Drehbewegung von vier Verbindungselementen nach Fig. 2 mit vier Verbindungselementen nach Fig. 1, die an einen Gegenstand 23 montiert sind, dargestellt. Um den Gegenstand 23 mit seinen bündig befestigten Verbindungselementen 5 bis 8 mittels Drehbewegung mit einem zweiten Gegenstand, an dem die Verbindungselemente 1 bis 4 bündig befestigt sind, zu verbinden, ist es erforderlich, daß die Verbindungselemente 1 bis 4 wie in Fig. 6 und 7 dargestellt zueinander stehen und die Verbindungselemente 5 bis 8 wie in Fig. 8 dargestellt zueinander stehen. Das Verbinden erfolgt, in dem zuerst das Verbindungselement 2 mit seinen seitlichen Öffnungen 9 und 10 in das Verbindungselement 6 mit seinen seitlichen Öffnungen 9 und 10 geschoben wird, wobei erst die Öffnung 10 in die Öffnung 10 und dann die Öffnung 9 in die Öffnung 9 greift. Mittels der anschließend auszuführenden Drehbewegung 27 verbinden sich die Verbindungselemente untereinander, d. h. 1 mit 5, 3 mit 7 und 4 mit 8.

Fig. 9 zeigt die vollzogene Verbindung der vier Verbindungselemente nach Fig. 2 mit vier Verbindungselementen nach Fig. 1, wobei auch hier die Verbindung in drei Richtungen gesichert ist. Wie zu erkennen ist, weisen die mittigen Einschnitte 11 und 12 der paarweise miteinander verbunden Verbindungselemente 1 und 5 jeweils in die gleiche Richtung. Zum Lösen der Verbindung muß die zuvor beschriebene Drehbewegung 27 in entgegengesetzte Richtung 28 ausgeführt werden. Bei der praktischen Anwendung, beispielsweise beim Verbinden zweier Motorradtaschen an einem Gepäckträger, ergibt sich durch die Gleichrichtung der mittigen Einschnitte der folgende Vorteil: Beide Taschen lassen sich wahlweise links oder rechts am Gepäckträger einhängen, wobei (in Fahrtrichtung betrachtet) die gleichen Bewegungsabläufe erfolgen, was die Handhabung sehr einfach macht. Die jeweiligen Drehpunkte (linke Seite des Gepäckträgers und rechte Seite des Gepäckträgers), an dem die Drehbewegungen ansetzen, liegen spiegelbildlich, wobei das Motorrad sozusagen die Spiegelachse darstellt.

## Patentansprüche

1. Verbindungselement zum Einhängen eines Gegenstandes an einer Stange (26), einer Platte, einem Zapfen (21) oder dergleichen und zum lösbaren Verbinden mehrerer Gegenstände untereinander mit einem ersten seitlichen Endbereich (31), einem Mittelteil (32) und einem zweiten seitlichen Endbereich (33), wobei der erste seitliche Endbereich (31), das Mittelteil (32) und der zweite seitliche Endbereich (33) flach ausgebildet und nebeneinander angeordnet sind, und der erste Endbereich (31) gegenüber dem Mittelteil (32) in einem ersten Biegebereich (13) und auch der zweite Endbereich (33) gegenüber dem Mittelteil (32) in einem zweiten Biegebereich (14) abgewinkelt sind und die beiden seitlichen Endbereiche (31, 33) in einer ersten Ebene (35) liegen und das Mittelteil (32) in einer zweiten Ebene (41) liegt,
**dadurch gekennzeichnet,**
**daß** der erste Endbereich (31) und der zweite Endbereich (33) gegenüber dem Mittelteil (32) derart abgewinkelt sind, daß die erste Ebene (35) und die zweite-Ebene (41) parallel zueinander sind und einen Abstand aufweisen, welcher sich durch die Höhe der Biegung ergibt, und das Verbindungselement zwei seitliche Öffnungen (9,10), oder einen mittigen Einschnitt (11-,12) oder zwei seitliche Öffnungen (9,10) und einen mittigen Einschnitt (11,12) aufweist.

2. Verbindungselement nach Anspruch 1,
**dadurch gekennzeichnet,**
**daß** in jedem Biegebereich (13,-14) eine seitliche Öffnung (9,10) angeordnet ist.

3. Verbindungselement nach Anspruch 1 oder 2,
**dadurch gekennzeichnet,**
**daß** die beiden Biegebereiche (13,14) identisch ausgebildet sind.

4. Verbindungselement nach Anspruch 3,
**gekennzeichnet durch**
eine spiegelsymmetrische Ausbildung bezüglich einer **durch** das Mittelteil (32) verlaufenden Mittelebene (36).

5. Verbindungselement nach einem der vorhergehenden Ansprüche,
**dadurch gekennzeichnet,**
**daß** die Öffnungsrichtung (39) des mittigen Einschnitts (11) entgegengesetzt der Öffnungsrichtungen (37, 38) der beiden seitlichen Öffnungen (9,10) ausgerichtet ist.

6. Verbindungselement nach einem der vorhergehenden Ansprüche 1 bis 4,
**dadurch gekennzeichnet,**
**daß** der mittige Einschnitt (12) die gleiche Öffnungsrichtung (40) aufweist wie die beiden seitlichen Öffnungen (9,10).

7. Verbindungselement nach einem der vorhergehenden Ansprüche,
**dadurch gekennzeichnet,**
**daß** das Mittelteil (32) im Bereich der seitlichen Öffnungen (9,10) Anlaufschrägen (17,18) aufweist.

8. Verbindungselement nach einem der vorhergehenden Ansprüche,
**dadurch gekennzeichnet,**
**daß** der mittige Einschnitt (11,12) Anlaufschrägen (19, 20) aufweist.

9. Verbindungselement nach einem der vorhergehenden Ansprüche,
**dadurch gekennzeichnet,**
**daß** mehrere, um 90 bzw. 180° gedrehte, an einem Gegenstand (23) montierte Verbindungselemente (1, 2, 3, 4) mit einer Drehbewegung mit mehreren Zapfen (21 a, 21 b, 21 c, 21 d) verbindbar sind.

10. Verbindungselement nach einem der vorhergehenden Ansprüche,
**dadurch gekennzeichnet,**
**daß** mehrere um 90 bzw. 180° gedrehte, an einem Gegenstand (23) montierte Verbindungselemente (1, 2, 3, 4) mit einer Drehbewegung mit mehreren identisch ausgebildeten, um 90° bzw. 180° gedrehten, an einem weiteren Gegenstand (23) montierten Verbindungselementen untereinander verbindbar sind.

11. Verbindungselement nach einem der vorhergehenden Ansprüche,
**dadurch gekennzeichnet,**
**daß** das Verbindungselement (1,5) aus abgewinkeltem Metallblech hergestellt ist.

12. Verbindungselement nach einem der vorhergehenden Ansprüche,
**dadurch gekennzeichnet,**
**daß** das Verbindungselement (1,5) an seinen gegenüberliegenden Endbereichen (31,33) Befestigungspunkte (15,16) aufweist.

## Claims

1. Connecting element for suspending an article on a rod (26), a plate, a pin (21) or the like and for releasably connecting a plurality of articles to one another, with a first lateral end region (31), a centre part (32) and a second lateral end region (33), wherein the first lateral end region (31), the centre part (32) and the second lateral end region (33) are flat and are arranged next to one another, and the first end region (31) is angled with respect to the centre part (32) in a first bending region (13) and the second end region (33) is also angled with respect to the centre part (32) in a second bending region (14) and the two lateral end regions (31, 33) are located in a first plane (35) and the centre part (32) is located in a second plane (41), **characterised in that** the first end region (31) and the second end region (33) are angled with respect to the centre part (32) in such a way that the first plane (35) and the second plane (41) are parallel to one another and have a spacing, which is produced by the height of the bend, and the connecting element has two lateral openings (9, 10) or a central indentation (11, 12) or two lateral openings (9, 10) and a central indentation (11, 12).

2. Connecting element according to claim 1, **characterised in that** a lateral opening (9, 10) is arranged in each bending region (13, 14).

3. Connecting element according to claim 1 or 2, **characterised in that** the two bending regions (13, 14) are identical.

4. Connecting element according to claim 3, **characterised by** a mirror-symmetrical configuration with respect to a centre plane (36) extending through the centre part (32).

5. Connecting element according to any one of the preceding claims, **characterised in that** the opening direction (39) of the central indentation (11) is orientated counter to the opening directions (37, 38) of the two lateral openings (9, 10).

6. Connecting element according to any one of the preceding claims 1 to 4, **characterised in that** the central indentation (12) has the same opening direction (40) as the two lateral openings (9, 10).

7. Connecting element according to any one of the preceding claims, **characterised in that** the centre part (32) has slanted contact surfaces (17, 18) in the region of the lateral openings (9, 10).

8. Connecting element according to any one of the preceding claims, **characterised in that** the central indentation (11, 12) has slanted contact surfaces (19, 20).

9. Connecting element according to any one of the preceding claims, **characterised in that** a plurality of connecting elements (1, 2, 3, 4) rotated by 90 or 180°, mounted on an article (23), can be connected by a rotational movement to a plurality of pins (21 a, 21b, 21c, 21d).

10. Connecting element according to any one of the preceding claims, **characterised in that** a plurality of connecting elements (1, 2, 3, 4) rotated by 90 or 180°, mounted on an article (23) can be interconnected by a rotational movement to a plurality of identically configured connecting elements rotated by 90° or 180°, mounted on a further article (23).

11. Connecting element according to any one of the preceding claims, **characterised in that** the connecting element (1, 5) is produced from angled sheet metal.

12. Connecting element according to any one of the preceding claims, **characterised in that** the connecting element (1, 5) has fastening points (15, 16) on its opposing end regions (31, 33).

## Revendications

1. Élément de fixation pour l'accrochage d'un objet à une barre (26), une plaque, une cheville (21) ou similaire et pour la fixation amovible de plusieurs objets les uns avec les autres avec une première zone d'extrémité latérale (31), une partie centrale (32) et une seconde zone d'extrémité latérale (33), la première zone d'extrémité latérale (31), la partie centrale (32) et la seconde zone d'extrémité latérale (33) étant de forme plate et étant disposées cote à cote, et la première zone d'extrémité latérale (31) étant pliée par rapport à la partie centrale (32) dans une première zone de cintrage (13) et la seconde zone d'extrémité (33) étant également pliée par rapport à la partie centrale (32) dans une seconde zone de cintrage (14) et les deux zones d'extrémité latérales (31, 33) se trouvant dans un premier plan (35) et la partie centrale (32) se trouvant dans un second plan (41),
**caractérisé en ce que**
la première zone d'extrémité (31) et la seconde zone d'extrémité (33) sont pliées par rapport à la partie centrale (32) de telle sorte que le premier plan (35) et le second plan (41) sont parallèles l'un par rapport à l'autre et présentent un espacement, formé par la hauteur du cintrage, et l'élément de fixation présente deux ouvertures latérales (9, 10) ou une entaille centrale (11, 12) ou deux ouvertures latérales (9, 10) et une entaille centrale (11, 12).

2. Élément de fixation selon la revendication 1,
**caractérisé en ce que**
dans chaque zone de cintrage (13, 14) est prévue une ouverture latérale (9, 10).

3. Élément de fixation selon la revendication 1 ou 2,
**caractérisé en ce que**
les deux zones de cintrage (13, 14) sont conçues de manière identique.

4. Élément de fixation selon la revendication 3,
**caractérisé par**
une configuration à symétrie spéculaire par rapport à un plan médian (36) traversant la partie centrale (32).

5. Élément de fixation selon l'une quelconque des revendications précédentes,
**caractérisé en ce que**
le sens d'ouverture (39) de l'entaille centrale (11) est orienté à l'opposé des sens d'ouverture (37, 38) des deux ouvertures latérales (9, 10).

6. Élément de fixation selon l'une quelconque des revendications précédentes 1 à 4,
**caractérisé en ce que**
l'entaille centrale (12) présente le même sens d'ouverture (40) que les deux ouvertures latérales (9, 10).

7. Élément de fixation selon l'une quelconque des revendications précédentes,
**caractérisé en ce que**
la partie centrale (32) présente des biseaux de butée (17, 18) dans la région des ouvertures latérales (9, 10).

8. Élément de fixation selon l'une quelconque des revendications précédentes,
**caractérisé en ce que**
l'entaille centrale (11, 12) présente des biseaux de butée (19, 20).

9. Élément de fixation selon l'une quelconque des revendications précédentes,
**caractérisé en ce que**
plusieurs éléments de fixation (1, 2, 3, 4) tournés de 90 ou 180° et fixés à un objet (23) peuvent être reliés avec plusieurs chevilles (21a, 21b, 21c, 21d) par un mouvement de rotation.

10. Élément de fixation selon l'une quelconque des revendications précédentes,
**caractérisé en ce que**
plusieurs éléments de fixation (1, 2, 3, 4) tournés de 90 ou 180° et fixés à un objet (23) peuvent être reliés les uns aux autres par un mouvement de rotation avec plusieurs éléments de fixation de forme identique, tournés à 90 ou 180° et fixés à un autre objet (23).

11. Élément de fixation selon l'une quelconque des revendications précédentes,
**caractérisé en ce que**
l'élément de fixation (1, 5) est fabriqué en tôle métallique pliée.

12. Élément de fixation selon l'une quelconque des revendications précédentes,
**caractérisé en ce que**
l'élément de fixation (1, 5) présente des points de fixation (15, 16) au niveau de ses zones d'extrémité opposées (31, 33).
